# EUROPEAN PATENT APPLICATION

(11) **EP 3 477 616 A1**
(43) Date of publication of application: **01.05.2019**
(21) Application number: 17199028.6
(22) Date of filing: 27.10.2017
(51) Int. Cl.: G08G 1/16, G05D 1/02, G06K 9/00

(54) **METHOD FOR CONTROLLING A VEHICLE USING A MACHINE LEARNING SYSTEM**

(71) Applicant: Sigra Technologies GmbH, 80992 München (DE)
(72) Inventor: MANSOUR, Karim, 81539 München (DE); GRABAR, Simon, 80636 München (DE); CHOPRA, Swagat, 81671 München (DE)
(74) Representative: Bird & Bird LLP

(57) **Abstract**

The present invention relates to a method for controlling a vehicle, particularly an autonomous vehicle. Particularly, the present invention relates to the use of a machine learning system, such as a deep neural network (DNN) to predict environmental parameters that are used to control and safely drive the ego vehicle. Also provided is a vehicle using the method of the invention to control the vehicle and a method for training a machine learning system.

## Description

The present invention relates to a method for controlling a vehicle, particularly an autonomous vehicle. Particularly, the present invention relates to the use of a machine learning system, such as a deep neural network (DNN) to predict environmental parameters that are used to control and safely drive the ego vehicle. Also provided is a vehicle using the method of the invention to control the vehicle and a method for training a machine learning system.

### Background

In the prior art, vehicles have been equipped with machines capable of detecting traffic signs (US 6813545 B2) and objects to prevent object collision (US 5314037 A). Also US 2014/0139368 A1 is concerned with a device for judging a likelihood of a collision between a vehicle and a target.

US 2010/0191391 A1 discloses a method for controlling a vehicle operating during a dynamic vehicle event that includes monitoring a first input image, monitoring a first tracked object within the first input image in a first tracking cycle, monitoring a second input image, monitoring a second tracked object within the second input image in a second tracking cycle, and determining a dissimilarity measure comparing the first tracked object to the second tracked object.

US 2008/0137908 A1 is concerned with a method for detecting and identifying a traffic sign in a computerized system mounted on a moving vehicle. The system includes a camera mounted on the moving vehicle which captures in real time multiple image frames of the environment in the field of view of the camera and transfers the image frames to an image processor. The processor is programmed for performing the detection of the traffic sign and for performing another driver assistance function.

US 2013/0242284 A1 refers to a system and method for fusing the outputs from multiple LiDAR sensors on a vehicle that includes cueing the fusion process in response to an object being detected by a radar sensor and/or a vision system.

WO 2009/071325 A1 and WO 2009/071106 A1 relate to an image analysis method for analysing a digital image comprising transforming object-pixels into a vector dataset. The vector for each object pixel comprises a positional, a directional and a distance component. US 8660734 B2 is concerned with a system and a method for predicting behaviour of detected objects. The document relates to improving the safety, use, driver experience and performance of autonomous vehicles.

US 8346480 B2 describes a navigation and control system for autonomous vehicles, the system including a sensor configured to locate objects in a predetermined field of view from a vehicle.

The disclosure of all publications throughout this application is incorporated in this application by reference.

Machine learning is a field of artificial intelligence, where a machine learning system can be trained to determine the best possible option, i.e. a parameter that correlates most closely to a particular setting. For example, machine learning systems have been trained to outcompete human players in the board games chess and go. There, the machine learning system has been trained to make a prediction of the best possible move based on the actual game situation. Machine learning systems have also been applied to image recognition. Our brains make vision, sound and touch seem easy. It does not take any effort for humans to tell apart a lion and a jaguar, read a sign, or recognise a human's face. But these are actually hard problems to solve with a computer, which seem easy to us only because our brains are incredibly good at understanding sensor data they receive (image, sound and touch).

Only recently, machine learning systems have also been applied to the automotive sector (US 9632502 B1).

However, for autonomous control of a vehicle high fidelity of the prediction is necessary since a wrong decision might not result in the loss of a board game but here human lives are at stake.

As known from the news, the present methods to control autonomous vehicles still need to be improved since accidents still occur where autonomous vehicles made a wrong driving decision.

### Summary of the Invention

To solve the above problems, the invention provides in a first aspect a method for controlling a vehicle, wherein the vehicle comprises at least two sensors and wherein at least one of said sensors is capable of detecting an object in proximity of the vehicle, the method comprising the following steps:
(a) obtaining sensor data from all sensors;
(b) inputting the sensor data obtained in step (a) into a machine learning system such as a deep neural network to predict one or more of the following output data:
   (i) a new vehicle velocity that most closely correlates with the inputted sensor data;
   (ii) a new steering angle that most closely correlates with the inputted sensor data;
   (iii) one or more objects that are within the detection range of said at least one sensor capable of detecting an object;
   (iv) the class of each object in (iii);
   (v) the reliability of each sensor;
   (vi) the area surrounding the vehicle in which the vehicle can safely drive;
      and further comprising the step
(c) providing a command to the vehicle to update its direction and/or velocity based on the output data obtained in step (b).

In a further aspect the invention provides a vehicle configured for carrying out the method of the invention.

In yet a further aspect a method is provided for training a machine learning system such as a deep neural network by training said deep machine learning system using multiple different labelled training datasets from different time points, wherein each labelled dataset includes
(A) sensor data obtained at one given time point from at least two sensors mounted on a vehicle and
(B) labels that correlate with the data in (A) where the labels include one or more of the following:
   (i) velocity of the vehicle at said given time point in (A);
   (ii) steering angle of the vehicle at said given time point in (A);
   (iii) positional information of objects that are within the sensor range of said vehicle sensors at said given time point in (A);
   (iv) the type and/or size of each object that is within the sensor range of said vehicle sensors at said given time point in (A);
   (v) the reliability of each sensor at said given time point in (A); and
   (vi) the area surrounding the vehicle at said given time point in (A), in which area the vehicle can safely drive in.

### Detailed Description of the Invention

In the following, some terms used herein are explained. Raw data received from sensors are unlabelled, so the data is not annotated. Typically, unlabelled data consists of digital data obtained from a measurement of the environment. Some examples of unlabelled data might include photos, audio recordings, videos, news articles, tweets, x-ray scans, etc. Without labelling these data to a second parameter that explains what is represented in these data the raw data themselves are of only little use for controlling a vehicle. A vehicle as used herein can be any vehicle. It is preferred that the vehicle is a car or a truck and most preferably a car. Most preferably the vehicle (e.g. car) is further configured to drive autonomously.

Labelled data typically takes a set of unlabelled data and augments each piece of that unlabelled data with some sort of meaningful "tag," "label," or "class" that is somehow informative or desirable to know. For example, labels for the above types of unlabelled data might be whether a photo contains a person or an animal, which exact words were spoken in an audio recording, what type of movement is shown in a video recording, what correlation to other events a news article has, what the overall sentiment of a tweet is, whether a shape in an x-ray image is a tumour, etc. Labels can be generated automatically using a computer software or manually by human annotation.

After obtaining a labelled dataset, this can be used to train a machine learning system which learns to correlate the raw data to a respective output. The output can be used to make a prediction of the label that most closely correlates with the raw data inputted into the machine learning system.

In a first aspect the invention provides a method for controlling a vehicle, wherein the vehicle comprises at least two sensors and wherein at least one of said sensors is capable of detecting an object in proximity of the vehicle, the method comprising the following steps:
(a) obtaining sensor data from all sensors;
(b) inputting the sensor data obtained in step (a) into a machine learning system such as a deep neural network to predict one or more of the following output data:
   (i) a new vehicle velocity that most closely correlates with the inputted sensor data;
   (ii) a new steering angle that most closely correlates with the inputted sensor data;
   (iii) one or more objects that are within the detection range of said at least one sensor capable of detecting an object;
   (iv) the class of each object in (iii);
   (v) the reliability of each object sensor;
   (vi) the area surrounding the vehicle in which the vehicle can safely drive;
   and further comprising the step
(c) providing a command to the vehicle to update its direction and/or velocity based on the output data obtained in step (b).

In the method of the invention the new vehicle velocity that is predicted in step (b) can be the same or different from the velocity that the vehicle has before carrying out step (c). In the method of the invention the new steering angle that is predicted in step (b) can be the same or different from the steering angle that the vehicle has before carrying out step (c). If the predicted steering angle differs from the current steering angle of the vehicle then the steering angle can be adjusted in step (c) accordingly. The analogous situation applies to the velocity.

For the purpose of the present invention said machine learning system may be an artificial neural network (ANN) and preferably a deep neuronal network (DNN). A deep neural network is preferably a feedforward network with a plurality of hidden layers (for example at least 10 hidden layers) as is well known to the average skilled person.

If an object is in the "proximity" of the vehicle this means that the object is within the detection range of said at least one sensor capable of detecting an object. In a particularly preferred embodiment of the method of the invention said object is an object outside of the vehicle that is able to damage the vehicle if it would collide with the vehicle or will take damage from the vehicle upon collision with it. For example, said object may be an object of a type selected from the group comprising an automobile, a pedestrian, a traffic sign, a traffic light and a bicycle.

Preferably, the method of the invention uses vehicle sensors that can detect objects in proximity of the vehicle and vehicle sensors that cannot detect any objects. In one embodiment of the method of the invention one of the at least two sensors of the vehicle is not capable of detecting an object. Most preferably, said at least one sensor capable of detecting an object is/are sensors that is/are also capable of detecting the position of an object relative to the vehicle. Even more preferably, in the method of the invention at least two object sensors are used which can detect objects and their position relative to the vehicle and in addition at least one sensor is used that cannot detect the position of an object in relation to the vehicle. In a preferred embodiment of the aforementioned embodiment at least three different sensors are used in the method. In a further preferred embodiment the method of the invention uses at least four different sensors, wherein at least two sensors are used which can detect objects and their position relative to the vehicle and in addition at least two sensors are used that cannot detect the position of an object in relation to the vehicle.

These two types of sensors in the preferred embodiment of the method are also referred to herein as object sensors and non-object sensors. Examples for non-object sensors include a daylight sensor, a rain sensor, a thermometer, a timer indicating the date and time, a camera filming the interior of the vehicle, a proximity sensor sensing the proximity of other vehicles and a fog sensor. A daylight sensor may be a photocell capable of detecting the amount of visible light outside of the vehicle. Non-object sensors may also be incorporated into the interior of the vehicle in order to sense information about any occupants. Non-object sensors may be used for example to identify the state of the driver's eyes, breathing, temperature, or heart rate to determine whether the driver is sleeping, temporarily distracted, etc. A non-object sensor within the meaning of the invention may also be a sensor that is configured such that it detects a condition of the vehicle itself, such as the vehicle's velocity or its steering angle. The aforementioned "non-object" sensors can also be used in place of a sensor that cannot detect the position of an object in relation to the vehicle in embodiments of the method mentioned also herein.

In step (a) sensor data from all sensors used by the method are obtained. Notably, however the method of the invention does not necessarily need to use all sensors of said vehicle. In other words the vehicle may comprise also sensors that are not used in the method of the invention.

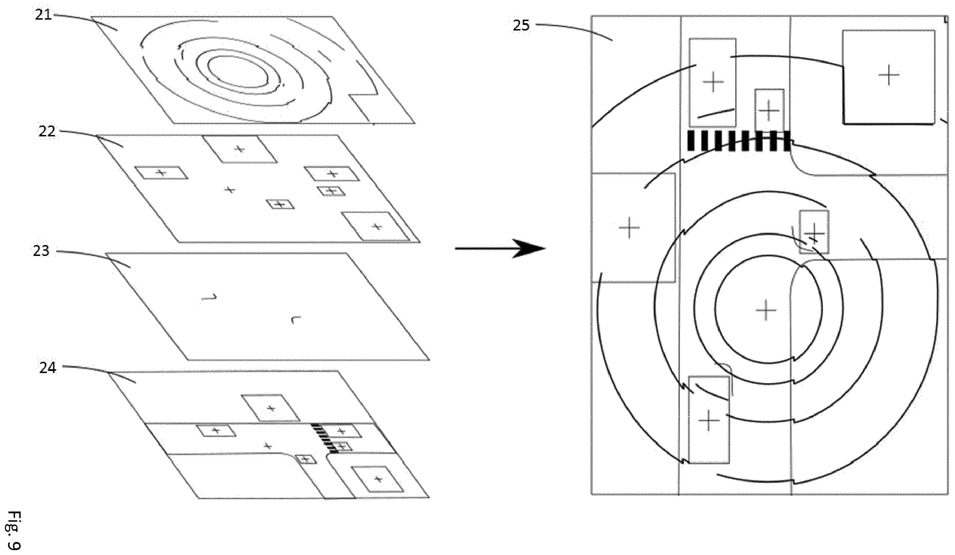

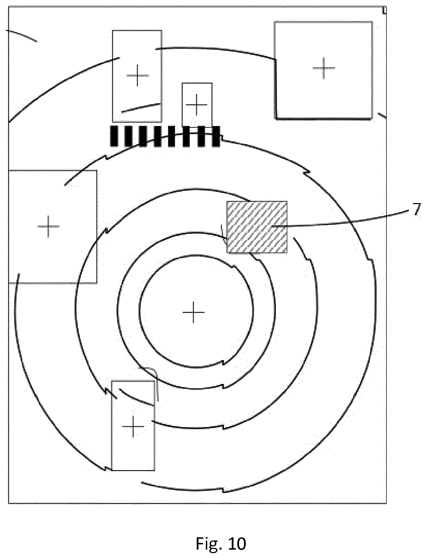

Prior to inputting the obtained sensor data into the machine learning system in step (b) it is preferred that the sensor data obtained from the object sensors is superimposed to form a combined dataset. The object sensor data can be scaled and/or aligned with respect to the same reference point outside of the vehicle before superimposing. With such combined object sensor data it is possible to align all available object sensor information for one particular point in space outside of the vehicle. Such scaling and superimposition is shown in figures 9 and 10.

Based on the output data of step (b) and during step (c), a command is provided to the vehicle to update its direction and/or velocity. A preferred way of controlling vehicle direction and velocity is for example disclosed in US 8660734 B2.

Unexpectedly, it has been found that inputting into the machine learning system in step (b) not only sensor data of sensors that are able to detect objects such as a data from a digital camera, a LIDAR, an ultrasonic proximity detector and/or a radar system but also sensor data that are not able to detect objects or at least are not capable of locating an object (see examples for such sensors herein above and below), this greatly increases the predictive power of the machine learning system.

It has been shown that the machine learning system when provided with multiple sensor information as outlined above is capable to weigh object sensor information based on the data obtained for the non-object sensors. For example, each sensor information may be given a weightage based on certain parameters like time of day, weather conditions, malfunctioning sensors etc. For example, in low light condition the radar readings may be given a higher weightage over data obtained from a digital camera. Attempting to weigh the object sensor data using conventional programming techniques was less successful. Unexpectedly, the preferred embodiment of the method of the invention where multiple different sensor data (e.g. sound, RGB, radar, Lidar, IMU and/or ultrasound sensors) are used with a machine learning system to obtain a prediction of how to best control the vehicle in the current environment could be greatly improved when inputting into the machine learning system also data collected from non-object sensors. A trained machine learning system (preferably a DNN) proved ideal to master the high complexity of correlations that can exist between the primary data in order to predict the output parameters with high accuracy.

In yet a further preferred embodiment of the method of the invention the class in step (b)(iv) is selected from the group consisting of
(I) the object's velocity in relation to the vehicle,
(II) the object's velocity in relation to the ground,
(III) the probability of the object colliding with the vehicle,
(IV) the position of the object in relation to the vehicle, and
(V) the object's type.

Thus, in this embodiment of the method the machine learning system has been configured in an initial training step to be capable of predicting which class of object or objects have been detected in step (b)(iii). In this context, the object's type may be selected from the group consisting of an automobile, a pedestrian, a traffic sign, a traffic light and a bicycle.

In order to perform in the method of the invention said machine learning system has to be trained so that the trained machine learning system is capable of predicting the parameters (i) through (vi) outlined in step (b) of the method of the invention.

In order to carry out the method of the invention, it is not necessary that the actual training step of the machine learning system is part of the method of the invention. It suffices if the machine learning system is a trained machine learning system capable of predicting the parameters (i) through (vi) outlined in step (b) of the method of the invention based on the sensor data provided in step (a).

However, in a preferred embodiment the training step is part of the method of the invention.

Thus, in a preferred embodiment of the method of the invention the method comprises a first step that precedes all other steps of the method, wherein in said first step the machine learning system has been trained through supervised learning using multiple labelled datasets obtained at multiple time points, wherein each labelled dataset includes
(A) all data obtained from said at least two sensors at one given time point and
(B) labels that correlate preferably at said given time point with the data in (A) where the labels include one or more of the following:
   (i) velocity of the vehicle at said given time point in (A);
   (ii) steering angle of the vehicle at said given time point in (A);
   (iii) objects that are within the detection range of said at least one sensor capable of detecting an object at said given time point in (A);
   (iv) the class of each object in (iii);
   (v) the reliability of each object sensor at said given time point in (A);
   (vi) the area surrounding the vehicle at said given time point in (A) in which the vehicle can safely drive in;

The labelling of the data can be done automatically. For example the steering angle can be detected automatically using a sensor and this determined steering angle value is then inputted together with all sensor data into the machine learning system. In another example the vehicle's velocity is determined automatically using a sensor and that information is then inputted together with all other sensor data into the machine learning system to train it. If the training is repeated a sufficient number of times for example using data sets from ten, a hundred, a thousand or even a hundred-thousand or more time points then the machine learning system will have been trained and is capable of predicting from an unlabelled dataset comprising only raw data from all sensors those parameters (i) through (vi) of step (b) of the method.

In one embodiment labelling of the data can also be done manually. For example object sensor data can be evaluated manually, which includes manually determining objects that actually are outside of and in proximity of the vehicle and determining the class of each object. These determined object labels are then used to train the machine learning system. Alternatively, objects captures by object sensors can also be labelled automatically by employing a reliable image recognition software (e.g. WO 2009/071325 A1 and WO 2009/071106 A1 and others). The automatically determined objects and their classes are then inputted along with the raw sensor data of all sensors into the machine learning system to train it. After training the machine learning system, it will be capable of reliably predicting one or more objects that are within the detection range. Thereby the trained machine learning system will not only rely on the raw data of one single sensor but will take into account the data obtained from all sensors. This greatly improves the predictive power of the method of the invention, in particular if in combination with the object sensor data also data from sensors are used that are not even capable of detecting an object (see also description above).

The training of the machine learning system to predict the class of each object can be done analogously by using labelling each object within the object sensor data either manually or automatically.

The reliability at a certain time point is known because it can be determined whether a particular sensor was capable at that time point to detect an object within the proximity of the vehicle or not. Furthermore, if there are multiple objects in proximity of the vehicle it can be determined how many objects can be detected using the data of a given sensor. Thus, the object sensor reliability in step (b)(v) of the method of the invention is preferably defined as the number of objects comprised in the sensor data over the total number of objects that are within detection range of that object sensor. Thus, in this embodiment the reliability of the sensor will be zero when an object is present but the object sensor data are unsuitable to detect it. The object sensor reliability will be 50% if there are actually a total of two objects but the object sensor data comprise only one of the two objects. In a preferred embodiment of the method of the invention the vehicle is equipped with at least three, or at least four (or more) different object sensors. In this embodiment, the training of the object sensor reliability can be done as follows: It is computed how many sensors detect an object that is present outside of the vehicle and how many of the sensors fail to detect that object. Instead of training the machine learning system with individual sensor reliability values the training can be also done by training the system using the overall object sensor reliability. For example, if the vehicle is equipped with four object sensors (that can be different or of the same type) then if only 3 out of the four object sensors actually produce data that is useful to detect an object that is present outside of the vehicle and within the detection range then the overall sensor reliability of all object sensors will be ¾ = 0.75. If all object sensors are actually recording the object, then the overall sensor reliability will be 100% = 1.

Predicting object sensor reliability is a valuable feature of the method of the invention. For example, the method can in a particularly preferred embodiment further comprise a step wherein the vehicle control is handed over to the driver when the majority of or all object sensors fail to detect objects.

In the method of the invention said at least two sensors can be each independently selected from the group of sensors consisting of a digital camera, a LIDAR, a Radar, a daylight detector, a rain detector, an ultrasonic proximity detector, a radar system, a Global Navigation Satellite System (GNSS) receiver, an inertial measurement unit (IMU), a microphone and a system for receiving information sent by another vehicle, a thermometer, a timer indicating the date and time, a digital camera filming the interior of the vehicle, a sensor for individual wheel speed, vibrations, acceleration/deceleration of each wheel, number of occupants in the vehicle, weight of the vehicle, a proximity sensor sensing the proximity of other vehicles and a fog sensor.

If the sensor is an object sensor, then it is preferred that that sensor capable of detecting an object is selected from the group comprising a digital camera, a LIDAR, an ultrasonic proximity detector, a radar system and a system for receiving object sensor information sent by another vehicle.

Preferably, the method of the invention uses more than two sensors and at least two of said sensors are capable of detecting an object. In a more preferred embodiment, the method uses at least four different sensors whereby at least two of said four sensors are non-object sensors.

Preferably, in step (b) the method of the invention predicts at least one of the following parameter combinations:
(1) Parameters (i) and (ii),
(2) Parameters (iii) and (iv),
(3) Parameters (i) through (iv),
(4) Paramters (i) through (v),
(5) Paramters (i) through (vi), or
(6) Parameter (v).

Each of the parameters (i) through (vi) predicted in step (b), either alone or in combination, is suitable to control the vehicle in step (c).

Predicted parameters (i) and (ii), i.e. a new vehicle velocity and/or new steering angle can be directly used to control the vehicle accordingly in step (c). Parameters (iii), (iv) and (vi) are helpful in reducing the collision risk of the vehicle. For example, if during a timed sequence the objects predicted in steps (iii) and optionally (iv) are approaching the vehicle in collision course, then the vehicle can be controlled in step (c) to initiate an evasive manoeuvre or stop the vehicle.

Similarly, if in step (b)(v) the reliability of the majority or all object sensors are predicted to be failing, then the vehicle in step (c) can be stopped and/or the vehicle control can be handed over to the driver.

Also the object class predicted in step (b)(iv) alone can be used to control the vehicle. As an example, if an object is predicted to be a red traffic light or a stop sign then the vehicle can be slowed or stopped.

In a further preferred embodiment of the method of the invention the method comprises the further step (d) wherein in step (d)
- the vehicle is controlled by changing its position and/or velocity in order to prevent a collision with an object determined in step (b)(iii); and/or
- the vehicle is controlled by changing its position and/or velocity in order to keep the vehicle inside the area that is safe to drive in determined in step (b)(vi).

It was also found by the inventors that the reliability of the method of the invention can be further enhanced when relying not solely on sensors of the vehicle that is controlled in step (c) but when also making use of the data obtained from sensors of neighbouring vehicles.

This is particularly helpful if an object of high relevance for example a person crossing the street, a traffic sign or similar is invisible to the object sensors of the vehicle for example because a large object (e.g. a truck or a tree) is blocking the view (non line-of-sight objects).

Thus, in a further preferred embodiment of the method of the invention, at least one of the sensors is a sensor of the vehicle that is controlled in step (c) and at least a further sensor is a sensor of a different, second vehicle.

In this context, it is preferred that said second vehicle is within the detection range of an object sensor of the vehicle that is being controlled in step (c) and that sensor data from at least one of the sensors of the second vehicle are transmitted from the second vehicle directly or indirectly to said vehicle that is being controlled in step (c).

If there is another vehicle in the proximity that is equipped with sensors and able to relay the sensor data to the vehicle controlled in step (c), then the sensor data can be transmitted and optionally also shared between the vehicles. The vehicle to vehicle communication (V2V for short) that can be used to obtain these data is well known to the average skilled person. V2V is an automobile technology designed to allow automobiles to "talk" to each other and the communication typically takes place in the spectra of 5.855-5.905 GHz for the US, 5.855-5.925 GHz for Europe and 5.770-5.850 GHz for vehicles in Japan.

In a preferred embodiment of the method of the invention the method comprises a further step in which the sensor data obtained in step (a) and/or the output data obtained in step (b) is uploaded to a database which is external of the vehicle that is being controlled in step (c); and wherein optionally also the geopositional information of the vehicle controlled in step (c) is uploaded to said external database.

Such data once uploaded to an external database can be used by other vehicles or even by the same vehicle when it passes through the same location where the sensor data have been previously been recorded. For example, if the same vehicle first records stationary objects like trees, buildings, traffic signs, road posts etc. in good weather conditions the uploaded data will be valuable at a later time for all vehicles passing through the same location again or anew in worse environmental condition (bad weather, night-time etc.).

Thus, preferably in step (b) of the method of the invention, the machine learning system such as a deep neural network additionally uses sensor data downloaded from a database where the database is external of the vehicle that is being controlled in step (c) and wherein the downloaded data has been previously uploaded by the same or a different vehicle to said external database. The downloaded sensor data thereby preferably matches the geopositional information of the vehicle controlled in step (c).

In yet a further preferred embodiment of the method of the invention, the vehicle comprises at least two sensors capable of detecting an object that is within detection range and at least one sensor not capable of detecting an object wherein the method further inputs in step (b) all sensor data into a trained machine learning system capable of predicting at least some or preferably all of the parameters (i) through (vi) in step (b).

Preferably, the machine learning system is a deep neural network. Deep neuronal networks are well known to the average skilled person. Preferably, the machine learning system is configures to carry out a NeuroEvolution of Augmenting Topologies (NEAT) algorithm or the TensorFlow algorithm.

In yet a further preferred embodiment of the method of the invention in step (b)(v) the reliability of object sensors is determined by inputting into said deep neural network sensor data from one or more sensors that are independently selected from the group consisting of a daylight sensor, a rain sensor, a thermometer, a timer indicating the date and time, a camera filming the interior of the vehicle, a proximity sensor sensing the proximity of other vehicles and a fog sensor.

Preferably, the sensor data obtained from each object sensor is weighted according to the reliability determined for that sensor in step (b)(v).

It is also preferred that in the method of the invention the machine learning system and preferably deep neural network was trained using training data that include
sensor data from the at least two vehicle sensors and further manually added label information, where the label information designates (1) all objects that are within the sensor range of the object sensors and that pose a collision risk to said vehicle and (2) the position of each object relative to the vehicle.

The training data can preferably also include further information about the objects such as
(i) the object's velocity in relation to the vehicle, and/or
(ii) the object's velocity in relation to the ground, and/or
(iii) the probability of the object colliding with the vehicle, and/or
(iv) the position of the object in relation to the vehicle, and/or
(v) the object's type.

As mentioned previously, during training the machine learning system, raw sensor data of all sensors is inputted into the machine learning system and at the same time also annotated information is inputted into the system. The machine learning system is thereby thought which raw sensor data best correlates with a certain parameter, such as the number and position of objects around the vehicle. Preferably, the machine learning system training is thereby not limited to sensor data from only object sensors but is provided with sensor data also from other sensors that are not capable of detecting an object, such as a rain sensor, the date, the time of the day, the current visibility (e.g. fog sensor), the temperature, steering angle, vehicle speed, and other parameters. Unexpectedly, it has been found that this way a trained machine learning system, when predicting one of the parameters (i) through (vi) in step (b) is more accurate as it also takes into consideration the further sensor data from the non-object sensors. The connections made during training within the machine learning system and preferably deep neuronal network can become quite complex in particular if the machine learning system is trained with sensor data obtained in different environments, e.g. different geographical locations, day times, seasons and weather conditions.

A further aspect relates to a vehicle configured for carrying out the method of any of the preceding claims. This vehicle can comprise a computational unit that is capable of operating a machine learning system that has been trained to predict the parameters in step (b). Methods of controlling the velocity of a vehicle are well known to the average skilled person e.g. from cruise control systems that have been implemented in vehicles since many years. Also methods of controlling the steering angle of a vehicle are known to the average skilled person e.g. from vehicles capable of self-parking the vehicle.

A further aspect of the invention relates to a method for training a machine learning system and in particular an artificial neuronal network such as a deep neural network by training said machine learning system using multiple different labelled training datasets from different time points, wherein each labelled dataset includes
(A) sensor data obtained at one given time point from at least two sensors mounted on a vehicle and
(B) labels that correlate with the data in (A) where the labels include one or more of the following:
   (i) velocity of the vehicle at said given time point in (A);
   (ii) steering angle of the vehicle at said given time point in (A);
   (iii) positional information of objects that are within the sensor range of said vehicle sensors at said given time point in (A);
   (iv) the type and/or size of each object that is within the sensor range of said vehicle sensors at said given time point in (A);
   (v) the reliability of each sensor at said given time point in (A); and
   (vi) the area surrounding the vehicle at said given time point in (A), in which area the vehicle can safely drive in.

Methods of training machine learning systems and in particular artificial neuronal networks are well known to the average skilled person (Y. Bengio, P. Lamblin, D. Popovici, and H. Larochelle. Greedy layer-wise training of deep networks, In Advances in Neural Information Processing Systems, 2007; S. Ioffe and C. Szegedy. Batch normalization: Accelerating deep network training by reducing internal covariate shift. arXiv preprint arXiv:1502.03167, 2015; A Tutorial on Deep Learning Part 2: Autoencoders, Convolutional Neural Networks and Recurrent Neural Networks by Quoc V. Le, published online http://ai.stanford.edu/∼quocle/tutorial2.pdf; Deep Learning in Neural Networks: An Overview Technical Report IDSIA-03-14 / arXiv:1404.7828 v3 by Jürgen Schmidhuber, The Swiss AI Lab IDSIA, Istituto Dalle Molle di Studi sull'Intelligenza Artificiale, University of Lugano & SUPSI, Galleria 2, 6928 Manno-Lugano, Switzerland, 8 October 2014, published online https://arxiv.org/pdf/1404.7828.pdf).

In the following, further preferred embodiments of the invention are outlined and practical examples are provided.

Preferably, during normal operation and not during training phase the sensor reliability output in step (b) (v) is the most likely reliability of the respective sensor, i.e. the most probable percentage of objects being in the region in which the sensor is sensitive and actually being detected. In the training phase, the reliability can be defined as the total number of objects detected by a given sensor divided by the total number of objects that are present and can be for example identified or detected by a human.

In this invention, machine learning is used to predict inter alia the environment around the vehicle controlled in step (c) to estimate the reliability of each object sensor used to perceive the environment, to estimate the safe driving area and to allow for making active driving decisions like steering control and vehicle velocity set point to autonomously control said vehicle traveling from point A to point B. This can be achieved by first training a deep neural network (DNN) using labelled data from multiple sensors and then deploying this DNN to output the predictions in form of labelled information like objects, classification etc., reliability of each sensor, estimate safe driving area and making driving decisions. With this deep learning approach based on data from multiple sensors, the DNN is able to predict parameters in order to make driving decisions using the training data that were recorded and labelled in the past.

This approach of building a deep neural network that takes in data, in particular combined data sets, from sensors like cameras, LiDARs, Radars, Ultrasonic sensors, IMU, GPS, Positioning systems, weather sensors, vehicle data (like vehicle speed, steering angle, vibration frequency and rotation speed of each wheel) the machine learning system (e.g. DNN) is preferably able to find co-dependencies between various sensor data to optimize driving decisions and find a safe area and conditions to drive. It was found that such computations and predictions are very difficult to formulate using traditional algorithms that are based on non-learning mathematical models. It was found that a trained DNN is able to provide for driving decisions in cases that are either hard to mathematically formulate or are not taken into consideration when building such vehicle control models. Reliability of a specific sensor in different environmental or driving condition can also be estimated by the trained machine learning system which can be used to inherently weight each sensor data to optimize environment perception and making better driving decisions. By employing at least two, at least three or even more sensors, object detection can be improved and false detections can be reduced. Sensor data from each sensor can be automatically weighted to achieve best possible object detection, classification and characterisation. Objects that register on multiple sensors simultaneously can have a higher probability of being predicted and classified by the trained machine learning system. However, even objects that only register faintly on multiple sensors can have higher probability of detection and classification using a machine learning system when compared to a detection algorithm that takes only single sensor data for detection. The use of combined data from multiple sensors can be more accurate in determining driving decision (speed, acceleration, steering etc.) when compared to driving decision based on single sensor information or sensor data obtained from multiple sensors, where the data of each sensor is processed separately to make a prediction. Using multiple detectors also increases the probability of obtaining redundant information which is useful if one of the sensors breaks down or becomes non-functional for other reasons. In case of malfunction of a single sensor or a subset of sensors, the trained machine learning system or preferably DNN can still allow making competent driving decisions (speed, acceleration, steering etc.) based on the sensors that are still functional.

In the following, preferred embodiments of the method are explained. These may be combined with each other unless expressly stated to the contrary.

Preferably, the machine learning system used in the method of the invention is a deep neural network and that DNN is based on a NeuroEvolution of Augmenting Topologies (NEAT) algorithm or the TensorFlow algorithm. The NEAT algorithm is a genetic algorithm for the generation of evolving artificial neural networks (a neuroevolution technique) developed in 2002. The algorithm alters both the weighting parameters and structures of networks, attempting to find a balance between the fitness of evolved solutions and their diversity. TensorFlow is a well-known open-source software library for machine learning and can be used as a system for building and training neural networks to detect and decipher patterns and correlations.

Particularly, the new vehicle velocity and/or new steering angle predicted in steps b(i) and (b)(ii) are used to avoid object collision. To this end, the method can comprise a step to avoid a collision with an object according to US 2014/0139368 A1 or US 2010/0191391 A1. From above-mentioned US8660734 and US 8346480 it is known how a vehicle is controlled based on electronic signals.

Preferably, in step (c) the vehicle is controlled based on one, several or all of the parameters determined in step (b), with the proviso that the vehicle can still follow a predetermined general route and/or is following a collision free-path to finally arrive at a predetermined destination location.

In another preferred embodiment of the method for controlling a vehicle, the vehicle comprises at least two sensors and at least one of the sensors is capable of detecting an object, wherein the method uses a trained machine learning system and wherein that machine learning system has been trained in the following manner:
- prior to step (a), sensor data are collected using sensors of the same or a different vehicle,
- prior to step (a), one or more of the parameters (i) through (vi) listed in step (b) are manually or automatically determined and assigned to the collected sensor data, and
- prior to step (a), the machine learning system (preferably DNN) is training using the collected sensor data and the assigned parameters,

It is not necessary that the machine learning system (preferably DNN) is housed in a vehicle during the training phase. Thus, in one embodiment of the method of the invention, the machine learning system (preferably DNN) is trained outside of a vehicle. A trained machine learning system (preferably DNN) can be used for controlling any vehicle that has the same sensors that were used to train the machine learning system (preferably DNN). To this end, the preferred method may further include the following steps:
- a trained DNN is loaded into a memory of a second or autonomous vehicle, the second vehicle having the same set of sensors as the first vehicle.

In doing so, the trained machine learning system (preferably DNN) can be used for more than one vehicle which reduces its cost per vehicle.

The method of a further preferred embodiment includes selecting the class in step (b)(iv) from the following group including
(i) the object velocity in relation to the vehicle,
(ii) the object velocity in relation to the ground,
(iii) the probability of the object colliding with the vehicle,
(iv) the position of the object in relation to the vehicle, and
(v) the object type.

This classification will facilitate making a driving decision in control step (c). For example, the object class information can be used in a further step where a pre-set logic operator determines an optimal and safe vehicle velocity and steering angle based on the objects that are currently surrounding the vehicle and their respective classes.

A preferred embodiment includes assigning said object, an object type selected from the group comprising an automobile, a pedestrian, a traffic sign, a traffic light and a bicycle.

Preferably, an object type can include information on the object's physical properties such as weight, size, average speed, maximum speed etc.. This can permit the trained machine learning system (preferably DNN) to operate with preliminary data until the originally remote object is closer to the vehicle.

Preferably, the vehicle comprises multiple sensors capable of detecting an object in proximity of the vehicle. In a further particularly preferred embodiment, the vehicle comprises multiple sensors that are capable of detecting an object, where the object is an automobile, a pedestrian, a traffic sign, a traffic light and/or a bicycle.

Preferably, the machine learning system (preferably DNN) used in the method of the invention is configured to predict from said sensor data obtained in step (a) one or more of the output data (i) through (vi) in step (b). The average skilled person knows how deep neural networks can generally be trained to then be capable of correlating an output data to an input data. In this process of deep learning, the training process maps inputs to outputs. After the training, the deep neural network is configured to determine which output data correlate to inputted data. Such trained deep neural network has also been called a "universal approximator", because it has learned to approximate the function f(x) = y between any input x and any output y. In the process of learning, i.e. in the process of training, the deep neural network, the neural network finds the right function "f", or in other words the correct manner of transforming x into y. Thereby, x could be for example digital camera image data and y could be the type of traffic signs that are comprised within the image and therefore correlate with it. In another example, X could also be radar sensor data and y could be the position of objects within the vicinity of the radar system that best correlate to said radar sensor data.

For the purpose of the present invention, it is preferred that the deep neural network is trained using labelled datasets. In this process, humans can transfer their knowledge to the dataset in order for the neural network to learn the correlation between labels and data. This is also termed supervised learning of the deep neural network.

It has been found by the inventors that when a deep neural network operating to control a vehicle is trained to identify the correlation between a single x and a single y variable this is suboptimal. Rather, for the present invention it is preferred that the deep neural network is trained by correlating a series of different sensor data to a series of output parameters that are useful for controlling the vehicle. This increases the predictive power of the neural network and its fidelity. As a result, the reliability and safety of controlling the vehicle's position and/or velocity based on the deep neural network output is improved. By employing at least two different sensors, object detection can be improved and false detections can be reduced. For example, in the present invention above data x can be a combination of digital camera data and radar sensor data whereas output data y is the position and the velocity such as an automobile in the proximity of the vehicle, i.e. combinations of data from different sensor are fed into the neural network.

Moreover, in order to make the trained machine learning system (preferably DNN) more robust, it is preferred that the data received from one or multiple sensors may be injected during training with noise or a malfunction of a sensor is simulated or the sensor may be switched off to determine the effect of these disturbances and malfunctions on the output provided by the machine learning system (preferably DNN). In this way, the machine learning system (preferably DNN) can learn to give a higher weightage to those sensor data that have not malfunctioned when taking the driving decision in step (c).

Further, in a preferred embodiment, the method includes executing step (b) with a deep neural network that has been trained through supervised learning based on multiple labelled datasets obtained at multiple time points, wherein each labelled dataset includes
(A) all data obtained from said at least two sensors at one given time point and
(B) labels that correlate with the data in (A) where the labels include one or more of the following:
   (i) velocity of the vehicle at said given time point in (A);
   (ii) steering angle of the vehicle at said given time point in (A);
   (iii) objects that are within the detection range of said at least one sensor capable of detecting an object at said given time point in (A);
   (iv) the class of each object in (iii); preferably the class (B)(iv) includes the position and/or type and/or size of each object
   (v) the reliability of each sensor at said given time point in (A);
   (vi) the area surrounding the vehicle at said given time point in (A) in which the vehicle can safely drive in

In this embodiment of the method described above, it is preferred that a label "correlates" with the data in (A) if it matches the vehicle status and/or vehicle environment at said given time point in (A). For example, if the vehicle was driving at a velocity of 100 km/h at said given time point in (A), then at that given time point for said sensor data that has been obtained in (A) said known velocity of 100 km/h will be the label (i). In another example, if the vehicle had a steering angle of 5° at said given time point in (A), then at that given time point for all sensor data that has been obtained in (A) said known steering angle will be the label (ii).

Preferably, the training step in the method of the invention is executed only once as the very first step of the method.

In yet another example, if within the detection range of said sensors that are capable of detecting objects there are - at said given time point in (A) - five objects at different positions within the proximity of the vehicle, then labels (iii) and (iv) will be the position of each of the five objects for example relative to the vehicle, their type and optionally also the size of each object.

Another preferred embodiment of the method includes that said at least two sensors of the vehicle are each independently selected from the following group of sensors comprising a digital camera, a LIDAR, a Radar, a daylight detector, a rain detector, an ultrasonic proximity detector, a radar system, a Global Navigation Satellite System (GNSS) receiver, an inertial measurement unit (IMU), a microphone and a system for receiving information sent by another vehicle, a thermometer, a timer indicating the date and time, a digital camera filming the interior of the vehicle, a sensor for individual wheel speed, vibrations, acceleration/deceleration of each wheel, number of occupants in the vehicle, weight of the vehicle, a proximity sensor sensing the proximity of other vehicles and a fog sensor. The camera can comprise an infrared image sensor and/or can be a stereoscopic camera. The information obtained from the GNSS receiver can be used to determine the global position of the car in a map.

By employing at least two sensors, object detection can be improved and false detections can be reduced.

LIDAR can be a light detection and ranging device associated with an autonomous vehicle scans through a scanning zone while emitting light pulses and receives reflected signals corresponding to the light pulses. The reflected signals indicate a three-dimensional point map of the distribution of reflective points in the scanning zone.

A radar sensor can be a radio detection and ranging device that scans a region of the scanning zone corresponding to a reflective feature indicated by the three-dimensional point map. Solid objects are distinguished from non-solid reflective features on the basis of a reflected radio signal that corresponds to the reflective feature. Positions of features indicated by the reflected radio signals are projected to estimated positions during the scan with the light detection and ranging device according to relative motion of the radio-reflective features indicated by a frequency shift in the reflected radio signals.

An image sensor or imaging sensor can be a sensor that detects and conveys the information that constitutes an image. It does so by converting the variable attenuation of light waves (as they pass through or reflect off objects) into signals, small bursts of current that convey the information. The waves can be light or other electromagnetic radiation. Ultrasonic proximity sensors can emit acoustic pulses, with a control unit measuring the return interval of each reflected signal and calculating object distances. The system in turns warns the driver with acoustic tones, the frequency indicating object distance, with faster tones indicating closer proximity and a continuous tone indicating a minimal pre-defined distance.

A Global Navigation Satellite System (GNSS) can be receivers that are using multiple navigation systems like GPS, GLONASS, Galileo and BeiDou to determine exact location on earth.

Navigation and maps: Navigation preferably refers to determining the position and direction of a stationary or a moving object on a map. Navigation relies on the GNSS positioning data and placing the object on a map based on this positioning data.

An inertial measurement unit (IMU) can be an electronic device that measures and reports a body's specific force, angular rate, and sometimes the magnetic field surrounding the body, using a combination of accelerometers and gyroscopes, sometimes also magnetometers.

A microphone is a sensor that converts sound into an electrical signal.

Sensor data can be influenced in different conditions. For example, weather conditions or ambient light can affect the sensitivity of certain sensor types or the reliability of the obtained sensor data. When processing the sensor data, the machine learning system (preferably DNN) is preferably trained to take into account sensor data that correlate with e.g. the current weather condition, the photon count outside of the vehicle and/or the temperature. By employing at least two sensors of different types, object detection can be improved and false detections can be reduced.

According to a further preferred embodiment, at least one sensor capable of detecting an object is selected from the group including a digital camera, a LIDAR, an ultrasonic proximity detector, a radar system and a system for receiving sensor information sent by another vehicle. In a most preferred embodiment the vehicle used in the method comprises at least four of these object sensors and preferably a digital camera, a LIDAR, an ultrasonic proximity detector and a radar system.

Another preferred embodiment of the method includes using more than two sensors and at least two of said sensors are capable of detecting an object. Preferably, the method uses two sensors of the same type and most preferably two sensors of identical type capable of detecting an object. By employing at least two sensors, object detection can be improved and false detections can be reduced. In another preferred embodiment the method uses more than three sensors wherein at least of said sensors are different from each other. This will help to obtain more comprehensive sensor data of the vehicle's proximity. By employing at least three sensors, particularly of different types, object detection can be improved and false detections can be reduced.

According to another preferred embodiment, the method comprises a further step (d) in which the vehicle is controlled by changing its position and/or velocity in order to
- prevent a collision with an object determined in step (b)(iii); and/or
- keep the vehicle inside the area that is safe to drive in determined in step (b)(vi).

Preferably, during step (d) a warning device of the vehicle can be instructed to emit a warning. This embodiment may help to reduce the likelihood of an accident or to avoid an accident altogether.

A further preferred embodiment includes that at least one of the sensors is a sensor of the vehicle that is controlled in step (c) and at least a further sensor is a sensor of a different, second vehicle. Preferably, said second vehicle is within the detection range of an object sensor of the vehicle that is being controlled in step (c) and wherein sensor data from at least one of the sensors of the second vehicle are transmitted from the second vehicle directly or indirectly to said vehicle that is being controlled in step (c). These embodiments may allow a harmonized operation of two vehicles particularly to avoid an accident. Another preferred embodiment of the method comprises a further step in which the sensor data obtained in step (a) and/or the output data obtained in step (b) is uploaded to a database which is external of the vehicle that is being controlled in step (c); and wherein optionally also the geopositional information of the vehicle controlled in step (c) is uploaded to said external database.

In a preferred embodiment, the deep neural network additionally uses sensor data downloaded from a database during step (c) where the database is external of the vehicle that is being controlled in step (c) and wherein the downloaded data has been previously uploaded by the same or a different vehicle to said external database.

The reliability of the sensor data can be improved if additional sensor data is downloaded from an external database and wherein this sensor data has been recorded by sensors of a vehicle that was at the same or a similar geopositional point as of the vehicle controlled in step (c). If sensor data from a similar geopositional point are used then it is preferred that said similar geopositional point is within visible range of said vehicle controlled in step (c). Relying additionally on external sensor data is beneficial in particular if these external sensor data have been recorded at daytime or in better weather or environmental conditions than the time and environmental conditions in which the vehicle controlled in step (c) drives in.

In a further preferred embodiment of step (c) of the method of the invention, the vehicle direction and/or velocity is altered to prevent collision of the vehicle with an object and/or to obey traffic signs or traffic lights.

In a preferred embodiment of the invention the method further comprises a step of verifying the existence of objects detected in step (b)(iii) by comparing whether the same said objects are detected continuously over time on at least two different points in time.

In another preferred embodiment of the method, step (a) includes scaling and superimposing sensor data from detectors that are capable of detecting objects within the same radius around the vehicle.

Another preferred embodiment of the method requires that in step (b)(v) the machine learning system (preferably a deep neural network) determines the reliability of each sensor that is capable of detecting an object particularly within their detection range.

It is preferred that during step (b)(v) of the method, the reliability of object sensors is determined by inputting into said the machine learning system (preferably a deep neural network) sensor data from one or more sensors that are independently selected from the group including a daylight sensor, a rain sensor, a thermometer, a timer indicating the date and time, a camera filming the interior of the vehicle, a proximity sensor sensing the proximity of other vehicles and a fog sensor. Preferably, at least two of these sensors are used in step (b)(v).

Preferably, the data obtained from each object sensor is weighted according to the reliability determined for that sensor in step (b)(v). Thereby, object detection can be improved and false detections can be reduced.

In a preferred embodiment of the method, the machine learning system (preferably a deep neural network) was trained using training data that include sensor data from the at least two different vehicle sensors and further manually added label information that designate (1) all detectable objects that are within the detector range and that pose a collision risk to said vehicle and that designate (2) the position of these objects relative to the vehicle.

A second aspect of the invention relates to a vehicle configured for carrying out the method of any of the preceding claims.

A third aspect of the invention relates to a method for training a machine learning system such as a deep neural network by training said deep neural network using multiple different labelled training datasets from different time points, wherein each labelled dataset includes
(A) sensor data obtained at one given time point from at least two sensors mounted on a vehicle and
(B) labels that correlate with the data in (A) where the labels include one or more of the following:
   (i) velocity of the vehicle at said given time point in (A);
   (ii) steering angle of the vehicle at said given time point in (A);
   (iii) positional information of objects that are within the sensor range of said vehicle sensors at said given time point in (A);
   (iv) the type and/or size of each object that is within the sensor range of said vehicle sensors at said given time point in (A);
   (v) the reliability of each sensor at said given time point in (A); and
   (vi) the area surrounding the vehicle at said given time point in (A), in which area the vehicle can safely drive in.

Preferably, said at least two vehicle sensors include at least one sensor capable of detecting an object, wherein the object is preferably of a type selected from the group consisting of an automobile, a pedestrian, a traffic sign, a traffic light and a bicycle. In a further preferred embodiment, one of the at least two sensors of the vehicle is not capable of detecting an object, e.g. may be configured such that it detects a condition of the vehicle itself, such as velocity or steering angle, or a condition of the surroundings such as temperature, humidity, light intensity etc.. More preferably, the vehicle comprises more than one sensor that are capable of detecting an object and more than one sensor that are not capable of detecting an object. Most preferably, the vehicle comprises more than two sensors that are capable of detecting an object and more than two sensors that are not capable of detecting an object. In this way data from a sensor capable of detecting an object can be combined with data being sensitive to conditions of the vehicle and/or the surroundings which allows for increasing the reliability of object detection.

In another preferred embodiment of the method, step (a) includes scaling and superimposing sensor data from detectors that are capable of detecting objects within the same radius around the vehicle. Step (a) may also include aligning the sensor data from at least two vehicle sensors with respect to a reference point arranged on the vehicle. This leads to a combined dataset. Subsequently, objects can be identified, listed, labelled and/or marked in this combined dataset (labelled dataset) and sensors can be assigned a sensor reliability, particularly by a human. During step (b) the labelled objects, the labelled dataset and/or the sensor reliabilities can be inputted into the machine learning system (preferably a deep neural network) as well for training purposes. So while processing the raw sensor data the machine learning system (preferably a deep neural network) knows which objects it will have to recognise. If the objects recognised by the machine learning system (preferably a deep neural network) do not agree with the identified (labelled) objects, then the machine learning system will loop back and refine or train itself. Following such an iterative approach, the "trained machine learning system" is ultimately able to predict output data according to step(b)(i) to step(b)(vi) with high fidelity.

In a further aspect, the invention provides a method for training a deep neural network to detect objects that are within the detection range of at least two sensors of a vehicle, wherein
- said objects are able to damage the vehicle if they were to collide with it and vice-versa;
- said at least two sensors are capable of detecting such collision relevant objects;
- said vehicle also comprises additional sensors that are not capable of detecting collision relevant objects;
wherein the method comprises the following steps:
(a) computationally processing the data of each sensor that is capable of detecting a collision relevant object to determine whether or not a collision relevant object is detected;
(b) training the deep neural network by teaching it which of the sensors that are capable of detecting collision relevant objects actually failed to detect a collision relevant object based on the processed data in step (a);
(c) training the deep neural network to know the reliability of each sensor that is capable of detecting a collision relevant object in dependence on the data obtained from the sensors that are not able to detect collision relevant objects.

A further aspect of the invention relates to a method for controlling an autonomous vehicle, wherein the autonomous vehicle comprises a sensor set with at least two sensors, and at least one of the sensors is capable of detecting an object in proximity of the autonomous vehicle, comprises the following steps:
- obtaining, preferably repeatedly, sensor data from all sensors of a first vehicle having the same sensor set as the autonomous vehicle, while the first vehicle is driven by a human,
- superimposing the obtained sensor data to form a combined data set, preferably scaling the sensor data obtained from at least one of the sensors and/or aligning the obtained sensor data with respect to a first vehicle reference point while superimposing;
- labelling the combined data set by a human or computer to obtain a labelled combined data set, wherein the labels include
   (iii) objects that are within the detection range of said at least one sensor capable of detecting an object;
   preferably, the labels include one or more of the following:
   (i) velocity of the first vehicle;
   (ii) steering angle of the first vehicle at said given time point in (A);
   (iv) the class of each object in (iii); preferably the class includes the position and/or type and/or size of each object
   (v) the reliability of each sensor;
   (vi) the area surrounding the vehicle in which the first vehicle can safely drive in
- causing a deep neural network (DNN) to process, preferably repeatedly, the sensor data of the labelled combined data set, preferably on an independent computer, such that the DNN recognises more than 2/3 of the labelled objects of the labelled combined data set, after which the DNN is considered a "trained DNN"
- storing the trained DNN in a memory of the autonomous vehicle,
- obtaining, preferably repeatedly, sensor data from all sensors of the autonomous vehicle, while the autonomous vehicle is operated,
- causing the trained DNN to process, preferably repeatedly, the obtained sensor data,
- using the trained DNN to predict one or more of the following output data based on the inputted sensor data:
   (xi) new vehicle velocity;
   (xii) new steering angle;
   (xiii) objects that are within the detection range of said at least one sensor capable of detecting an object;
   (xiv) the class of each object in (xiii);
   (xv) the reliability of each sensor and preferably each object sensor;
   (xvi) the area surrounding the autonomous vehicle in which the autonomous vehicle can safely drive;
- providing a command to the autonomous vehicle to update its direction and/or velocity based on the output data obtained in the previous step.

### Description of the figures and examples

Further features, advantages and application of the present invention become apparent from the following figures, examples and the respective description thereof. It is to be understood that the following figures and examples are only exemplary, outlining preferred embodiments but are by no way limiting the invention as claimed:

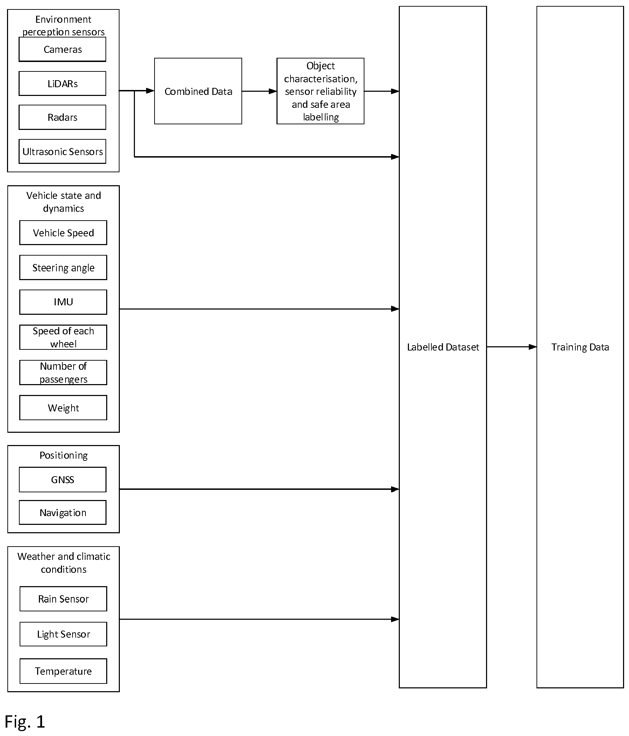

Figure 1 shows an exemplary method of generating training data which is used to train the deep neural network (DNN) which can be employed in an embodiment of the method of the present invention for controlling a vehicle. The figure also shows a block diagram of how the training dataset is generated for training. Sensors like Cameras, LIDARs, Radars and Ultrasonic sensors that can give a sense of environment are considered as environment perception sensors and these sensors are capable of detecting an object, i.e. these sensors may detect objects that are able to damage a vehicle if it would collide with the vehicle and vice-versa. For example, said object may be an object of a type selected from the group comprising an automobile, a pedestrian, a traffic sign, a traffic light and a bicycle. On the left, groups of sensors of the vehicle are shown. The signals of the sensor groups "environment perception sensors", "vehicle state and dynamics", "positioning" and "weather and climatic conditions" are obtained (preferred embodiment of above step(a)) and are fed to the labelled dataset. The signals of the sensors of the group "environment perception sensors" are also combined or superimposed, particularly after scaling and/or aligning, to form a combined dataset. In this combined dataset objects are labelled, and sensor reliability is determined and added. Moreover, driving areas are also labelled, particularly by a human. The labelled dataset typically includes the sensor data, the combined dataset and at least the labelled objects forms the training data for training the DNN. Thus, during training the DNN is also fed with the information about identified/labelled objects before processing the sensor data, i.e. with the expected output.

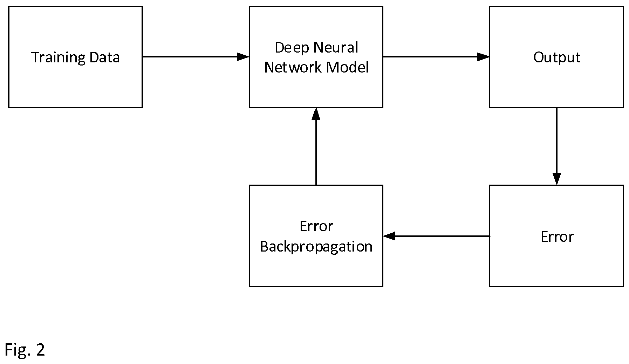

Figure 2 shows an exemplary method to train the deep neural network. The training data is processed by the DNN for the first time and an output is provided. This output includes the objects recognised by the DNN which is compared with the identified/labelled objects. If the recognised objects do not agree with the identified objects, then the error is fed back and the DNN processes the training data once. While doing so, the DNN progresses or improves towards becoming a trained DNN. Preferably, once the recognised objects agree to predetermined extent with the identified objects, then the DNN can be considered trained.
   The process shown in figure 2 can be a training process. In a preferred embodiment, the deep neural network is trained to predict and characterize objects in the vehicle's proximity using the combined dataset, estimate sensor reliability, estimate safe area to drive, estimate and based on the output of the DNN active driving decisions like speed and steering angle can be provided. A large amount of training data in different driving conditions; urban and highway condition; different weather conditions like rain, snow and sunny; at different times of day, morning, evening and twilight may be required to train the deep neural network to be able to provide sufficiently reliable input for taking active driving decisions and controlling vehicle speed and steering autonomously.
   In this embodiment, once the deep neural network is trained, this trained DNN is deployed on the same ego vehicle with same sensors which were used to obtain the data for training and can be used for other autonomous vehicles with the same sensors.

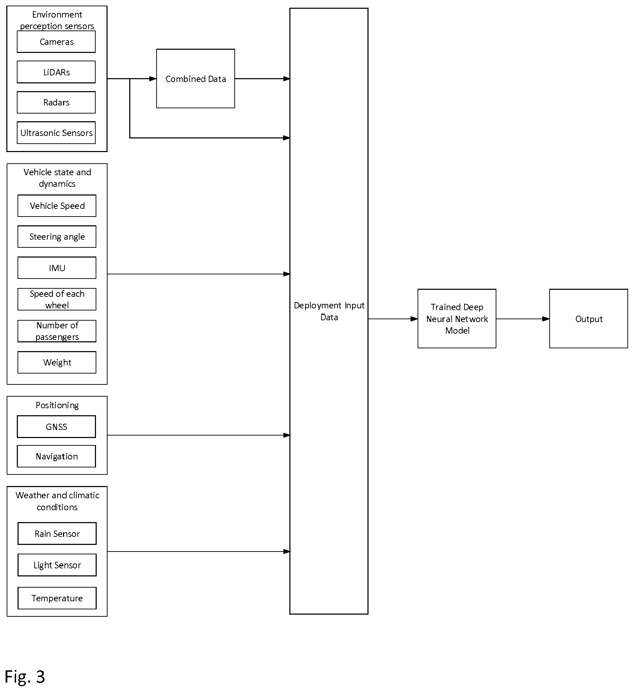

Figure 3 shows an exemplary method for controlling a vehicle with a trained deep neural network. The figure also shows a block diagram of a deep neural network that can be used. Again, the signals of the sensors of the group "environment perception sensors" are combined to form the combined dataset. The combined dataset and the sensor data are inputted to the trained DNN, which then provides the output according to step (b). Environment perception sensors can be used to perceive stationary and moving objects around the ego vehicle.
   The deployment input data refers to data on which the deep neural network will act on to predict and characterize objects in it vicinity using the combined dataset, estimate sensor reliability, estimate safe area to drive and provide an output based on which active driving decisions like speed and steering angle can be taken. Using large amount of training data from multiple sensors the network is initially trained to provide for reliable output for taking active driving decisions by inherently correlating the vehicle velocity and steering to the sensor data.

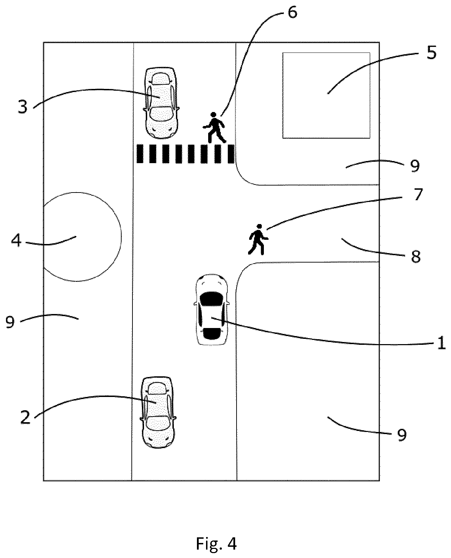

Figure 4 shows an example of real world scenario (vehicle's proximity X). The vehicles 2 and 3 are driven in opposite lane of ego vehicle 1 with mounted sensors. There are two pedestrians 6, 7 crossing the road, pedestrian 6 is crossing the street at zebra cross, pedestrian 7 is freely walking on the street 8 but not on the pedestrian walk 9. The house 5 and tree 4 are located in the street 8.

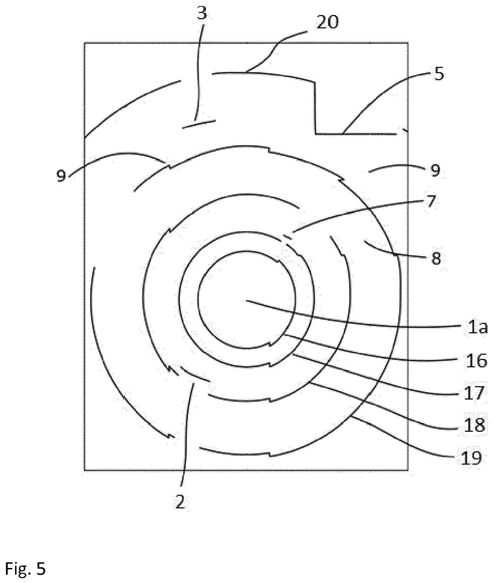

Figure 5 shows a top view of the output of a LIDAR Sensor (Light Detection And Ranging sensor) of ego vehicle 1 of proximity X as shown in Figure 4. Such sensors can have multiple channels where each channel records distances from sensor to first obstacle in angles ranging from 0 to 360° in its plane. Figure 5 shows five channels from a 360°-LIDAR that was captured from proximity X. Numbers 16 to 20 represent the output from five different LIDAR channels with increasing distance from the position 1a of the sensor. Numbers 7 to 10 represent what could be objects.

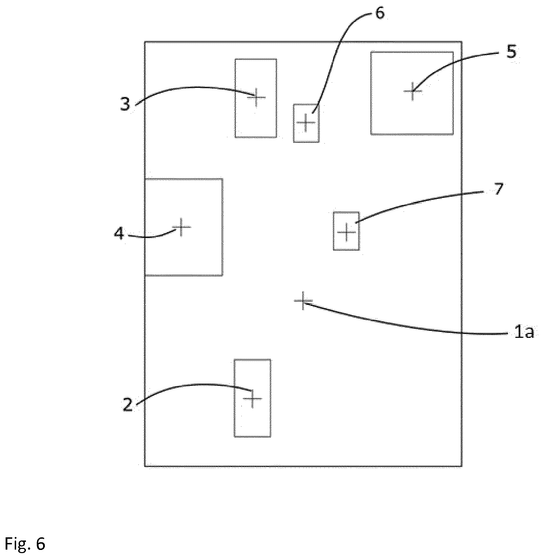

Figure 6 shows a top view of the output of a radar sensor of ego vehicle 1 of proximity X as shown in Figure 4. The output of radar sensor can be clusters of detected objects. Number 1a represents the sensor location on the ego vehicle and numbers 2 to 7 represent what could be objects.

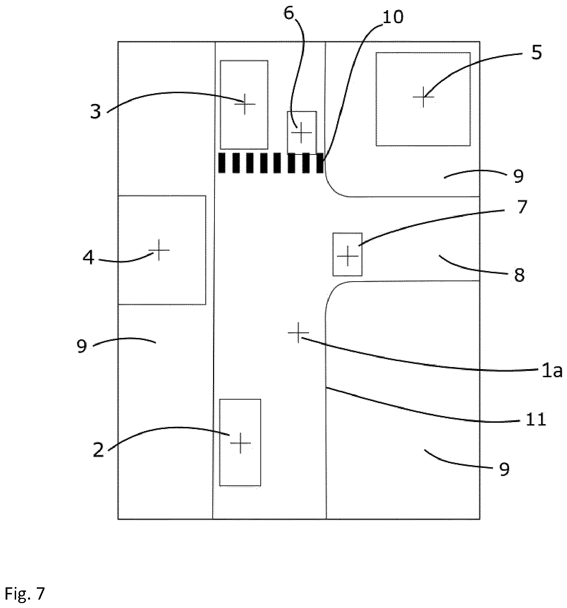

Figure 7 shows a top view of the output from a camera (RGB data or infrared) of ego vehicle 1 of proximity X as shown in Figure 4. The numbering is similar to that of figure 4.

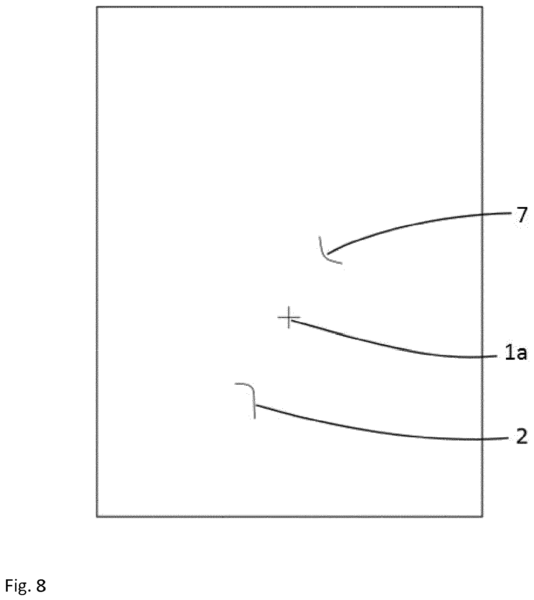

Figure 8 shows a top view of the output from an ultrasonic proximity sensor on ego vehicle 1 in proximity X of Figure 4. The sensor is able to detect objects in particular, that are in closer proximity to the vehicle. The sensor itself is, however, unable to classify the type of each object, i.e. what it represents, such as another car, a pedestrian or similar. Number 1 represents the sensor location on the ego vehicle and numbers 2, 7 represent potential objects.
   The data from all the said sensors which is recorded at a given time instance is then plotted and overlaid on same X and Y axis to form a preferred embodiment of a combined dataset. In a preferred embodiment, after sensor data has been superimposed in a single platform this data can now be labelled. Labelling preferably means taking a snapshot of all data in the same timeframe and marking a specific object and giving him properties.
   One preferred example of a snapshot of the proximity X with labels added by humans is to take raw or processed data from: Lidar, Radar, Ultrasonic sensor, Image sensor, Microphones, Vehicle speed, Date and time, Positioning, Temperature sensor, Humidity (rain) sensor, Steering sensor, IMU sensor.
Figure 9 shows an exemplary visual representation of sensor data of proximity X of Figure 4 that can be labelled by a human for example and is a preferred example of a combined dataset. The LIDAR sensor output 21, radar sensor output 22, ultrasonic sensor output 23 and the image sensor output 24 are shown. A geographic map of proximity X of Figure 4 including the territorial around the vehicle within the maximum detecting reach of sensors 21 to 24 and the sensor signals are combined or superimposed to form the combined sensor data 25 of this preferred embodiment. The geographic map can be obtained from a database and based on the GPS coordinates of the vehicle and may include satellite image information, terrain information such as altitude and/or vector data defining streets and optionally additional geographic information.
   The advantage of combining data before labelling is that when sensor data from multiple sensors is combined, objects that are not detected by one environment perception sensor might be detected by other sensors at the same instance. Also, because reliability of each sensor is labelled based on all the objects detected in the combined data, the deep neural network can inherently give a weightage to each sensor based on reliability data and correlate it to other aspects like vehicle speed, weather and climatic conditions, temperature and so on.
   In this preferred embodiment, the labelling process of combined data may be performed by a human or a labelling software. The combined data is labelled with object characterisation, sensor reliability and safe area to drive (also referred to as a green carpet or free space). For each time instance, in this preferred embodiment the combined data is labelled with object class characteristics like X and Y position of the object assuming the vehicle to be the origin, size of the object in height and width, classification of the objects into pedestrians, vehicles, street signs, traffic signs, and/or relevant classifications of the objects that can be observed by at least one of the sensors and the sensor on which the object was detected on. Sensor reliability is labelled for each type of sensor. The sensor reliability refers to the ability of a given sensor type to detect objects compared to all the objects that were detected during the labelling process of the combined data. This is preferably given by an equation of US 2014/0139368 A1. The reliability of a given sensor is indicative of the ability of that sensor to perceive the environment around the ego vehicle. Preferably, the combined data is also labelled with vectors or co-ordinates (X, Y) for the area that is safe to drive on.
Figure 10 shows the exemplary visual representation of figure 9 where a pedestrian 7 was manually labelled. The pedestrian, who is an example of an object in the proximity of the vehicle ("+" in the middle of the rectangle), was assigned further properties such as: walking direction, age, clothing colour, looking direction and someone.

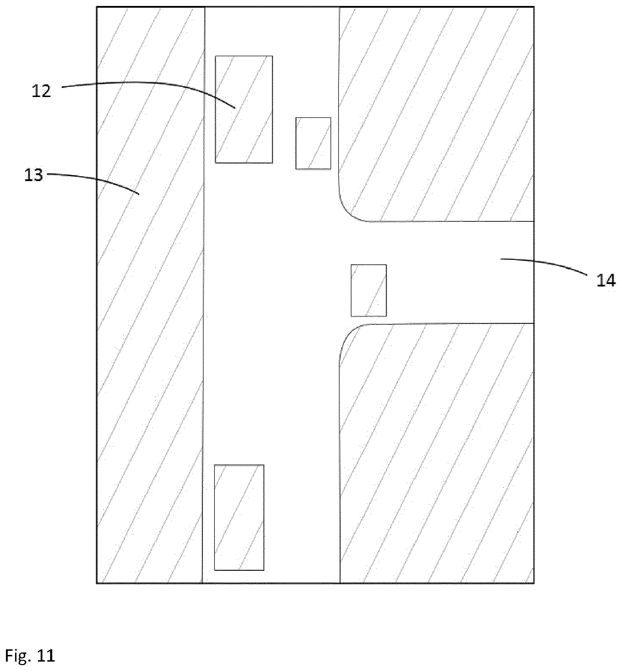

Figure 11 shows labelling of safe area to drive in the proximity X of Figure 4 using the combined data. As the name suggests, this area refers an area in the vicinity of the ego vehicle that is safe to drive at a given time instance. Any area in the combined data with a stationary or a moving object, or an area that is forbidden to drive like the pedestrian side walk is deemed unsafe to drive and hence excluded in the labelling.
   Preferably, a 'labelled dataset' as referred to in figure 1, is generated using the labelling of the combined data, i.e. using object characterisation, sensor reliability and safe area, combined with raw sensor data from each environment perception sensor, vehicle state and dynamics data, positioning data and weather and climatic conditions data for each time instance. This labelled dataset in its entirety is the data accumulated over time instance the ego vehicle was manually driven. This training data is then generated from the labelled data which will be input to the deep neural network for training as shown in Figure 2. The output of the deep neural network is then compared with the labelled dataset. The error between the prediction of the deep neural network and the labelled data is then back propagated to calculate the error contribution of each neuron.

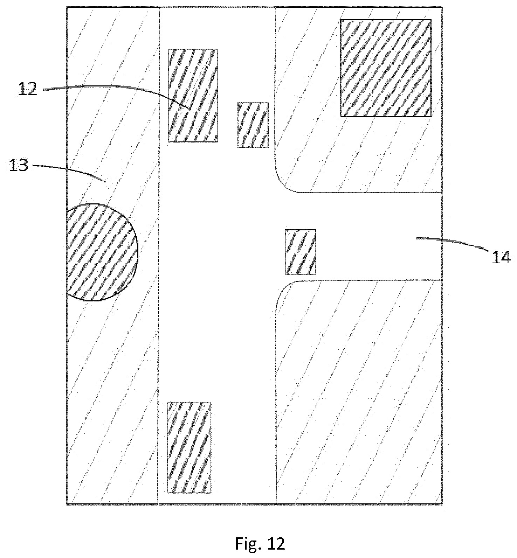

Figure 12 shows the exemplary visual representation of figure 9 where the safe driving area is manually labelled for detection. Area 14 represents places where it is safe to drive and 12 and 13 represent areas where the vehicle is not allowed to drive.
   Alternatively, or additionally, areas surrounding the vehicle can be manually labelled in accordance to the risk of driving in the respective area. The risk will be assigned in accordance to the consequences for driving in the respective area. An area where any possible harm to other humans could occur once the vehicle enters that area will be assigned the highest risk-score. Possible damage only to the vehicle itself or to other vehicles will be ranked lower. Possible damage to inanimate objects and immobile objects will be assigned an even lower risk score.
   For example, darkly hatched areas 12 represent "deadly "zones that need to be avoided by the vehicle by all means. Lightly hatched areas 13 represent areas that the vehicle can enter if necessary (for example to steer clear of and avoid a collision with an unforeseen or too late detected object) and that represent a low risk for any harmful collision.
   The labelled free space output can be used to train the machine learning system and preferably to control an autonomously driving vehicle. Together with signals from other sensors like navigation, mapping, camera based object recognition, the proper driving behaviour and driving path can be determined.

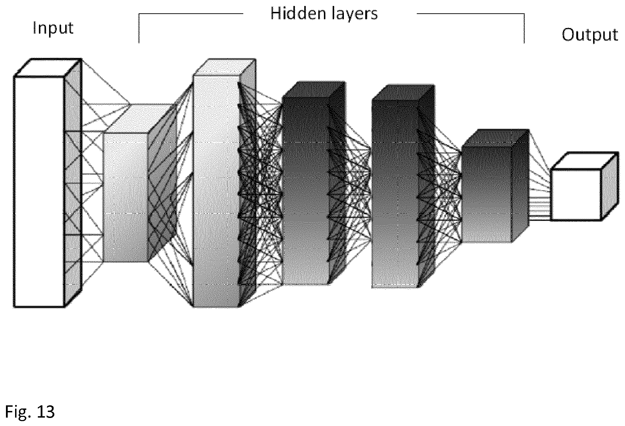

Figure 13 shows an exemplary deep neural network which may be used in the present invention containing an input layer, hidden layers and an output layer. The exemplary DNN has an input layer with input nodes, multiple hidden layers with hidden nodes and an output layer with output nodes. In general, the input nodes refer to raw data or pre-processed data that is provided to the network to make a prediction and/or an estimate the network is trained for. The output layer refers to the DNN output which could be a prediction of classification and/or an estimate for regression. The middle layers in literature are referred to as hidden layers as the values of the hidden nodes are not observed in the training dataset. In this application, deep neural networks are used to accurately classify objects on road around the ego vehicle, predict the safe area to drive, estimate reliability of each environment perceiving sensor and provide output used to take vehicle decisions like vehicle speed and steering (angle or radius of curvature) based on sensor data from multiple sensors. In order to achieve this, the deep neural network has to be trained using a training dataset to make the said predictions and estimations.

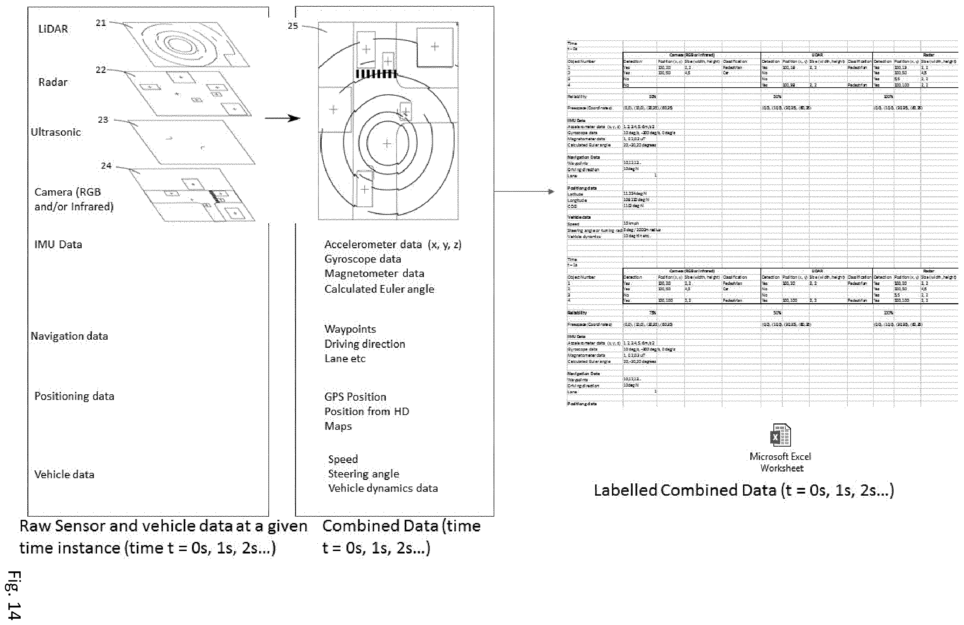

Figure 14 shows steps of a preferred embodiment which steps may lead to labelled data, particularly for different points in time. Step (a) of obtaining sensor data from all of the sensors of the vehicle is performed periodically and this is shown on the left of figure 14.
   The vehicle can include a LIDAR sensor, a radar sensor, an ultrasonic sensor, in image sensor, particularly formed by a camera. Their data is combined to form the combined dataset 25. The vehicle can include sensors such as inertial sensors (IMU), a GPS sensor and sensors for detecting the vehicle's speed and the steering angle, the signals of which are not superimposed but are nevertheless added to the combined dataset (see the rectangle subtitled "combined data (time t = 0s, 1s, 2...)" in figure 14). The combined datasets are then labelled, particularly by a human. The results of labelling are shown on the right of figure 14 and are explained in further detail in the following. The "labelled combined data" can be used in step (b) and for training the DNN.

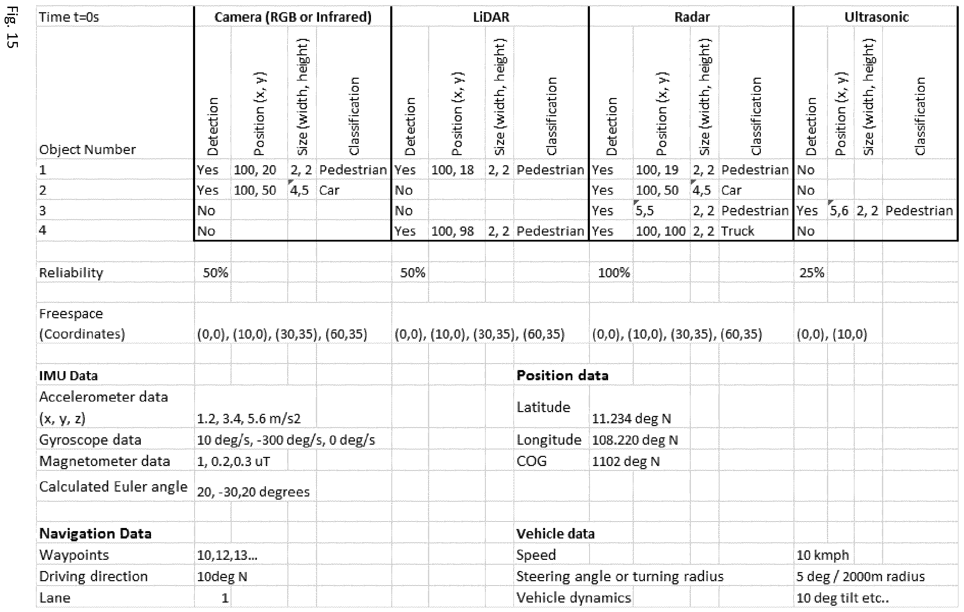

Figure 15 shows a preferred example of a labelled dataset at the point of time "0" seconds (s). The labelled data includes initial data, navigation data, position data and vehicle data as well. Four objects could be identified and object 3, a pedestrian, is quite close to the vehicle in comparison to the other objects. Four identified objects have not been detected by all sensors and the sensor reliability, in this embodiment, is calculated as the number of detected objects divided by the number of identified objects of some of the sensors is less than one. The vehicle runs at 10 km/h with the steering angle of 5°. This labelled data can be used to train the DNN.

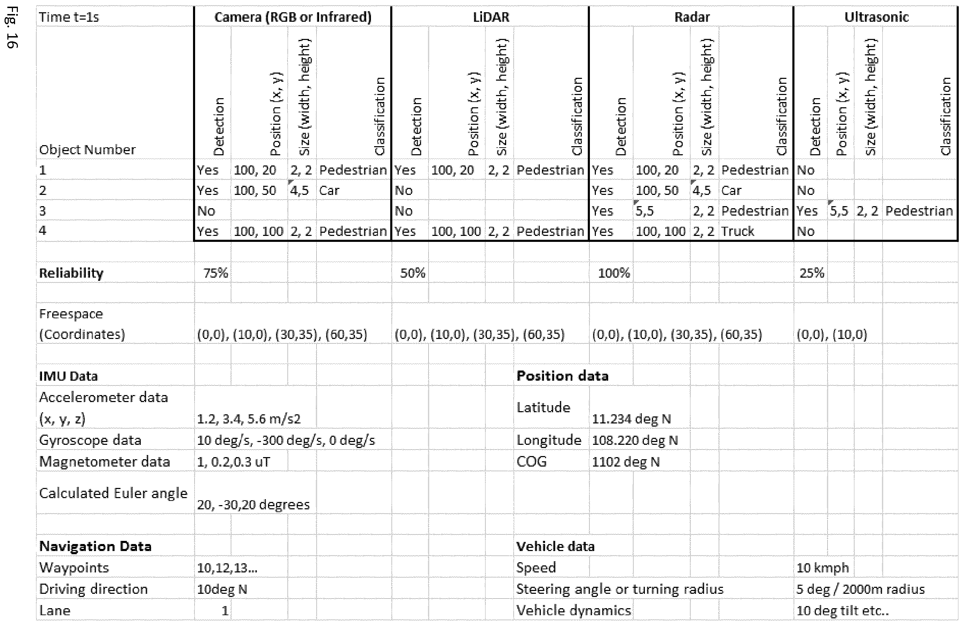

Figure 16 shows a labelled dataset at "1" s quite similar to that of figure 15. A comparison with the labelled dataset of figure 16 shows that some of the objects moved relative to vehicle. Apparently, the path of the vehicle has not changed. Apparently, the camera now also recognised the pedestrian (object 4) and as a result the camera reliability is higher than before.

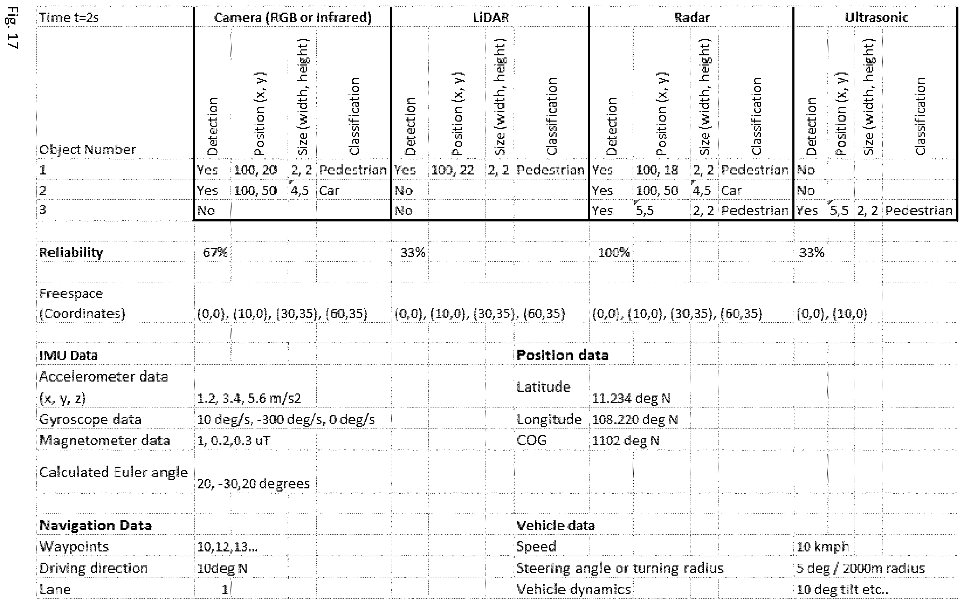

Figure 17 shows part of the labelled dataset at "2" s quite similar to that of figures 15, 16. The pedestrian, which could be identified as the 4^{th} object at "1" s, has left the proximity of the vehicle. The speed and steering angle of the vehicle haven not changed and the vehicle still follows the same path as before.

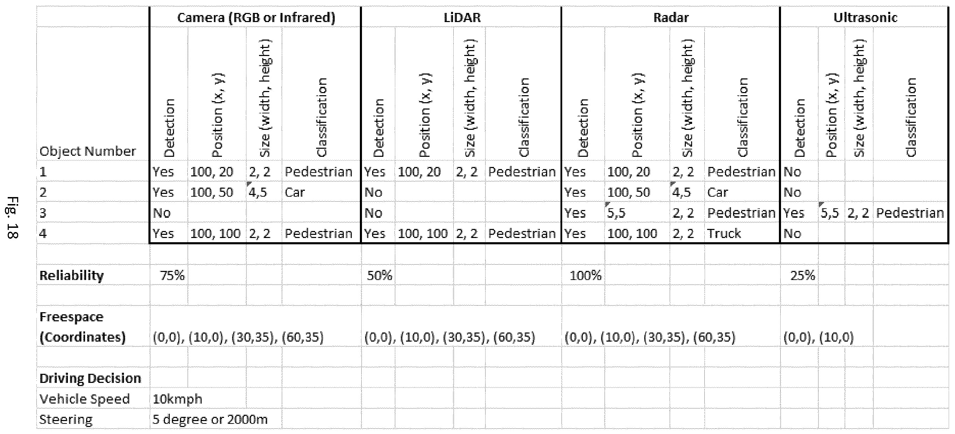

Figure 18 shows an example of output data provided by a trained machine learning system and in this example a DNN.

In the training process, the sensor data, including vehicle data and the labelled data is used to adjust the weights of the layers of the DNN. The sensor signals, some of which are superimposed to form a combined data set, and labels from combined data are fed to the deep neural network. The layers are adjusted using back propagation based on the labelled data. Part of the labelled data is generally also used for validation (in forward propagation) to ascertain that the errors in the training and the validation process are respected and are reduced.

Preferably, the trained machine learning system (preferably a DNN) is stored on a memory of a particularly autonomous vehicle having the same set of sensors which provided data for training the machine learning system. The trained DNN can then output data according to step (b)(i) through step (b)(vi). An example of output data is shown in figure 18.

Four identified objects have not been detected by all sensors and the sensor reliability, in this example calculated as the number of detected objects divided by the number of identified objects, of some of the sensors is less than one. An object list includes classifications and other properties of four detected objects in the proximity of the vehicle. Output data includes the reliabilities of the sensors, free space coordinates and the driving decision to proceed with a speed of 10 km/h and a steering angle of 5°. These parameters can be used in step (c) to make a driving decision.

### Preferred combinations of sensors that can be used in the method of the invention

The sensors can be categorized into environment perception sensors (Cameras, LiDARS, Radars, Ultrasonics), vehicle state and dynamics sensors (that provide information like vehicle speed, steering angle, IMU. Speed of each wheel, passengers and weight of the vehicle), Positioning (GPSS/GNSS information, navigation information in terms of waypoints), weather and climatic condition sensors (that provide information about rain, light and temperature). All or a sub set of these sensors can be used to ascertain a) objects around the vehicle b) free space c) driving decisions d) reliability of environment perceiving sensors. In essence, as many different kind of environment perceptions sensors there are, the better the environment is perceived under different weather conditions and light conditions. For example, an autonomous vehicle can operate autonomously using cameras, but in case of extreme weather conditions (like snowing or heavy rains), using information just from camera may not be useful to take driving decisions, information from Radars under these conditions along with cameras is much more useful. Another aspect is the precision and resolution in terms of distance is more accurate from LiDAR when compared to cameras, but cameras provide much better information to classify the object. Hence by using camera and LiDAR, the object or sign can be very precisely classified with a very good accuracy for distance of that object from the ego vehicle. Therefore, in a most preferred embodiment suitable to operate in different weather condition, light conditions, vehicle dynamics, data from the sensor groups shown in figure 1 are preferably used in the method of the invention.

### Scaling, superimposing aligning and labeling of sensor data

These steps can be used in particular to prepare a training dataset to train a machine learning system (preferably DNN) used in the method of the invention.

Reference is made to figure 9. As depicted in this image, data from preferred object sensors namely cameras, LiDARs, Radars and ultrasonic sensors are used to form a combined dataset. This can be accomplished using multiple sensors of each type around the ego vehicle to perceive everything in the vicinity around the vehicle.

The data from each type of object sensor can comprise the following:
Cameras: With multiple cameras placed on the ego vehicle in a preferred embodiment, a 360 degree view of objects, road markings etc. can be captured in form of image data (preferably RGB image data), which can be further calibrated and pre-processed to get RGB pixel bitmaps and also depth (D) information. Furthermore, using stereo cameras, RGB and D (distance) information can also be obtained from the cameras. However, irrespective of using mono and/or stereo cameras, RGB and D information can be obtained of each object that is outside of the vehicle and within detection range. Each object can be therefore labelled and plotted on an X,Y grid around the vehicle as shown in figure 7.
LiDAR: Single or multiple LiDARs mounted on the ego-vehicle can be used. LiDAR provides data as what is referred to as a point cloud. Each point in the point cloud refers a reflection from the objects around the vehicle. Each point in this point cloud typically has an r, theta, Z and an intensity value associated to it. R refers to the radial distance, theta refers to the angle and Z refers to distance from XY plane in a cylindrical coordinate system. These can then be mathematically converted to X, Y, Z information in Cartesian coordinate system. As with the camera information, the point cloud data is plotted on an X, Y grid around the vehicle as shown in figure 5.
Radar: Radar provides object information in terms of X and Y distance. Using multiple Radars around the ego-vehicle, distance information, velocity and acceleration information can be obtained. In short, the distance of each object as detected by Radar can be again plotted in an X, Y grid around the vehicle as shown in figure 6.
Ultrasonic sensors: Ultrasonic sensors typically have a rather small detection range unlike other object sensors mentioned. Using multiple ultrasonic sensors (preferably the number of ultrasonic sensors is in the range from 8 to 16) preferably surrounding the ego vehicle (i.e. the vehicle controlled in the method of the invention), distance information of objects that are nearby (distance typically less than 10m) relative to the ego-vehicle can be obtained and can also be labelled on a X,Y grid as shown in figure 8.

Preferably, all the labelled X,Y data discussed about is plotted along a unified X,Y distance grid and is used as labelled training data when training the machine learning system (preferably DNN). The preferred format is object data that is representable in an XY grid.

With the raw object sensor data being aligned on an X,Y grid, the sensor data set can then be further manually labelled to indicate objects in bounding boxes (given by (x1, y1), (x2,y2), (x3, y3) and (x4, y4) and object classes, e.g. classified as pedestrians, vehicle, traffic sign, cat, dog etc. or free space using similar bounding spaces with 4 or more coordinates. Examples are shown in figures 7 and 9.

### Weightage of sensor data

Object sensor data are used to predict the parameters in step (b) of the method of the invention. Depending on current environmental conditions including but not limited to weather conditions, light conditions, speed of the vehicle and so on, the trained machine learning system is preferably trained to predict the parameters in step (b) more accurately by also including sensor information that is obtained from non-object sensors. In other words the machine learning system has learned during the training phase how to the best weigh the information obtained from the object sensors to achieve the best possible predictive power in step (b) and therefore an optimal driving decision in step (c).

### Faulty sensor data detection

A faulty sensor can be detected when
a. Communication with the sensor fails which could be due to a software failure in the sensor or hardware failure when the communication link is physically broken
b. The sensor physical fails due to malfunction in the hardware or software
c. Power loss to the sensor

These failures are usually detected in some form or the other in terms of a communication failure when the sensor stops communicating. In this case, the reliability of the sensor is 0 (zero).

Sometimes a faulty sensor is not detected since it fails due to weather or climatic conditions (rain, snow or sunlight etc.), resulting in increased noise or data loss. Under normal conditions in prior art methods, the sensor is still communicating but the data is not useful to take active driving decisions or could even become dangerous if it leads to making incorrect driving decisions.

In the method of the present invention even in the latter case outlined above faulty sensor data can be predicted using the trained machine learning system and such data can either be weighted less compared to the data from the other object sensors or the machine learning system could decide based on its training to ignore the faulty sensor data altogether. This makes the method of the present invention more robust against failure.

### Commands for controlling the vehicle

Predicted output parameters from the machine learning system (preferably DNN) include vehicle velocity and steering angle. This vehicle velocity and the steering angle output in step (b) can be directly used as input to specific electronic control units in the vehicle that then perform the task of controlling certain actuators to turn the steering wheel to the specific set point and in case of velocity the control unit controls the engine or electric motor in such a way to increase or decrease the velocity of the vehicle to reach its new velocity set point.

### Forbidden and free space for driving

During training the space surrounding the vehicle where the vehicle is safe to drive will be typically be determined manually and used to label a respective training dataset to train the machine learning system (preferably DNN) to correlate the raw sensor data with a free space setting that best correlates with the current sensor data.

With preferably thousands and even millions of training rounds the machine learning system (preferably DNN) will be trained to reliably predict the free space in step (b)(vi).

### Most preferred combination of labels used in the method

Vehicle velocity, steering angle, reliability of each sensor and safe area to drive are in principle sufficient to effectively navigate a remote vehicle. Thus, the prediction of parameters (i), (ii), (v) and (vi) is the most preferred combination of parameters predicted in step (b) of the method of the invention.

### Taking into account a prescribed route to be followed by the vehicle

As also outlined further above herein, step (c) of the method of the invention preferably also takes into consideration a preset route or a designated target destination when controlling the preferably autonomous vehicle. The vehicle thereby follows waypoints set by a navigation control unit. A waypoint is an intermediate point or place on a route or line of travel, a stopping point or point at which the course is changed. The waypoints can be set by units in the vehicle and the vehicle is then steered to reach these waypoints, e.g. based on GPS signals. If the machine learning system's output in the method of the invention predicts a parameter according to which the vehicle needs to slow down, avoid a collision with an object or observe traffic signals, then these parameters can be taken into account in step (b) during driving the vehicle autonomously towards the next waypoint. Should the road be blocked altogether, then new waypoints can be computed and the vehicle can take a detour.

### List of reference signs

- 1: driven vehicle
- 1a: sensor location
- 2-11: objects
- 12, 13: area forbidden to drive
- 14: area allowed to drive
- 16-20: output from different LIDAR channels
- 21: LIDAR sensor output, "sum" of different LIDAR channels
- 22: Radar sensor output
- 23: ultrasonic sensor output
- 24: image sensor output
- 25: combined sensor data

## Claims

1. Method for controlling a vehicle, wherein the vehicle comprises at least two sensors and wherein at least one of said sensors is capable of detecting an object in proximity of the vehicle, the method comprising the following steps:
(a) obtaining sensor data from all sensors;
(b) inputting the sensor data obtained in step (a) into a machine learning system such as a deep neural network to predict one or more of the following output data:
(i) a new vehicle velocity that most closely correlates with the inputted sensor data;
(ii) a new steering angle that most closely correlates with the inputted sensor data;
(iii) one or more objects that are within the detection range of said at least one sensor capable of detecting an object;
(iv) the class of each object in (iii);
(v) the reliability of each object sensor;
(vi) the area surrounding the vehicle in which the vehicle can safely drive;
and further comprising the step
(c) providing a command to the vehicle to update its direction and/or velocity based on the output data obtained in step (b).

2. Method of claim 1, wherein the class in step (b)(iv) is selected from the group consisting of
(I) the object's velocity in relation to the vehicle,
(II) the object's velocity in relation to the ground,
(III) the probability of the object colliding with the vehicle,
(IV) the position of the object in relation to the vehicle, and
(V) the object's type.

3. Method of any of the preceding claims, wherein said object is of an object type selected from the group comprising an automobile, a pedestrian, a traffic sign, a traffic light and a bicycle.

4. Method of any of the preceding claims, wherein the method comprises a first step that precedes all other steps of the method, wherein in said first step the machine learning system has been trained through supervised learning using multiple labelled datasets obtained at multiple time points, wherein each labelled dataset includes
(A) all data obtained from said at least two sensors at one given time point and
(B) labels that correlate with the data in (A) where the labels include one or more of the following:
(i) velocity of the vehicle at said given time point in (A);
(ii) steering angle of the vehicle at said given time point in (A);
(iii) objects that are within the detection range of said at least one sensor capable of detecting an object at said given time point in (A);
(iv) the class of each object in (iii);
(v) the reliability of each sensor at said given time point in (A);
(vi) the area surrounding the vehicle at said given time point in (A) in which the vehicle can safely drive in;

5. The method of any of the preceding claims, wherein said at least two sensors are each independently selected from the group of sensors comprising a digital camera, a LIDAR, a Radar, a daylight detector, a rain detector, an ultrasonic proximity detector, a radar system, a Global Navigation Satellite System (GNSS) receiver, an inertial measurement unit (IMU), a microphone and a system for receiving information sent by another vehicle, a thermometer, a timer indicating the date and time, a digital camera filming the interior of the vehicle, a sensor for individual wheel speed, vibrations, acceleration/deceleration of each wheel, number of occupants in the vehicle, weight of the vehicle, a proximity sensor sensing the proximity of other vehicles and a fog sensor.

6. The method of any of the preceding claims, wherein the at least one sensor capable of detecting an object is selected from the group comprising a digital camera, a LIDAR, an ultrasonic proximity detector, a radar system and a system for receiving object sensor information sent by another vehicle.

7. The method of any of the preceding claims, wherein the method uses more than two sensors and at least two of said sensors are capable of detecting an object.

8. The method of any of the preceding claims, wherein the method comprises the further step (d) wherein in step (d)
• the vehicle is controlled by changing its position and/or velocity in order to prevent a collision with an object determined in step (b)(iii); and/or
• the vehicle is controlled by changing its position and/or velocity in order to keep the vehicle inside the area that is safe to drive in determined in step (b)(vi).

9. The method of any of the preceding claims, wherein at least one of the sensors is a sensor of the vehicle that is controlled in step (c) and at least a further sensor is a sensor of a different, second vehicle.

10. The method of claim 9, wherein said second vehicle is within the detection range of an object sensor of the vehicle that is being controlled in step (c) and wherein sensor data from at least one of the sensors of the second vehicle are transmitted from the second vehicle directly or indirectly to said vehicle that is being controlled in step (c).

11. The method of any of the preceding claims, wherein the method comprises a further step in which the sensor data obtained in step (a) and/or the output data obtained in step (b) is uploaded to a database which is external of the vehicle that is being controlled in step (c); and wherein optionally also the geopositional information of the vehicle controlled in step (c) is uploaded to said external database.

12. The method of any of the preceding claims, wherein in step (b) the machine learning system such as a deep neural network additionally uses sensor data downloaded from a database where the database is external of the vehicle that is being controlled in step (c) and wherein the downloaded data has been previously uploaded by the same or a different vehicle to said external database.

13. The method of any of the preceding claims, wherein in step (b) the machine learning system is a deep neural network.

14. The method of any of the preceding claims, wherein in step (b)(v) the reliability of object sensors is determined by inputting into said deep neural network sensor data from one or more sensors that are independently selected from the group consisting of a daylight sensor, a rain sensor, a thermometer, a timer indicating the date and time, a camera filming the interior of the vehicle, a proximity sensor sensing the proximity of other vehicles and a fog sensor.

15. The method of claim 13 or 14, wherein the data obtained from each object sensor is weighted according to the reliability determined for that sensor in step (b)(v).

16. The method of any of the preceding claims, wherein the machine learning system and preferably deep neural network was trained using training data that include
sensor data from the at least two vehicle sensors and further manually added label information, where the label information designates (1) all objects that are within the sensor range of the object sensors and that pose a collision risk to said vehicle and (2) the position of each object relative to the vehicle.

17. Vehicle configured for carrying out the method of any of the preceding claims.

18. Method for training a machine learning system such as a deep neural network by training said machine learning system using multiple different labelled training datasets from different time points, wherein each labelled dataset includes
(A) sensor data obtained at one given time point from at least two sensors mounted on a vehicle and
(B) labels that correlate with the data in (A) where the labels include one or more of the following:
(i) velocity of the vehicle at said given time point in (A);
(ii) steering angle of the vehicle at said given time point in (A);
(iii) positional information of objects that are within the sensor range of said vehicle sensors at said given time point in (A);
(iv) the type and/or size of each object that is within the sensor range of said vehicle sensors at said given time point in (A);
(v) the reliability of each sensor at said given time point in (A); and
(vi) the area surrounding the vehicle at said given time point in (A), in which area the vehicle can safely drive in.
